Europäisches Patentamt

European Patent Office

Office européen des brevets

(19)

(11) Numéro de publication: **0 061 423**
**B1**

(12) **FASCICULE DE BREVET EUROPEEN**

(45) Date de publication du fascicule du brevet:
16.09.87

(51) Int. Cl.⁴: **G 02 B 6/38**

(21) Numéro de dépôt: **82810104.8**

(22) Date de dépôt: **09.03.82**

(54) Centreur pour connecteur de fibres optiques.

(30) Priorité: **24.03.81 CH 1973/81**

(43) Date de publication de la demande:
**29.09.82 Bulletin 82/39**

(45) Mention de la délivrance du brevet:
**16.09.87 Bulletin 87/38**

(84) Etats contractants désignés:
**CH DE FR GB LI**

(56) Documents cités:
**EP - A - 0 025 012**
**DE - A - 2 516 858**
**FR - A - 2 373 801**
**US - A - 3 904 269**
**US - A - 4 008 112**
**US - A - 4 158 477**
**US - A - 4 166 672**
**US - A - 4 167 304**

**Patent Abstracts of Japan, volume 4, no. 35, 25 mars 1980 page 73P3**
**HANDBOOK OF CHEMISTRY AND PHYSICS 1972, THE CHEMICAL RUBBER CO. CLEVELAND OHIO pages B20-B21**
**J.S. SCOTT "A dictionary of building" 1969 PENGUIN BOOKS LTD. HARMONDSWORTH (GB) page 53**

(73) Titulaire: **Comadur SA, Avenue Léopold-Robert 105, CH-2301 La Chaux-de-Fonds (CH)**

(72) Inventeur: **Juvet, Claude-Michel, Nouveau Stand 6, CH-2114 Fleurier (CH)**

(74) Mandataire: **Gresset, Jean et al, ICB Ingénieurs Conseils en Brevets SA Faubourg du Lac 6, CH-2501 Bienne (CH)**

ACTORUM AG

## Description

La présente invention se rapporte à un centreur pour fibres optiques du type comprenant une virole d'assemblage et deux guides logés et positionnés dans la virole. Ces guides définissent un logement intercalaire destiné à recevoir un liquide de couplage optique des fibres. Ils comportent chacun un trou destiné à recevoir l'une des fibres, les deux trous étant coaxiaux.

Un tel centreur est décrit dans le brevet américain 4 158 477. Dans ce brevet, les guides définissent avec la virole un logement dans lequel se trouve du liquide de couplage optique. Ce logement est hermétiquement fermé. De ce fait, l'assemblage du connecteur est rendu difficile et le démontage pratiquement impossible sans provoquer la perte du liquide. Une solution similaire est décrite dans le document Patent Abstract of Japan, volume 4, numéro 35, du 25 mars 1980, page 73 P3. Il présente les mêmes inconvénients.

Le but de la présente invention est de remédier à ces inconvénients.

Ce but est atteint grâce au fait que les parois de chacun des deux guides comportent une première partie revêtue d'une couche de matériau oléofuge et une deuxième partie non revêtue de ce matériau, agencées de manière à délimiter des barrières annulaires empêchant l'écoulement du liquide hors du centreur.

Grâce à cette configuration particulière, les fibres peuvent être enlevées et remises en place, sans que pour autant il y ait perte de liquide.

Un tel centreur pour connecteur de fibres optiques sera avantageusement utilisé dans le domaine des télécommunications.

D'autres aspects et caractéristiques de l'invention apparaîtront à l'aide de la description et des dessins ci-après où les mêmes références représentent les mêmes éléments et dans lesquels

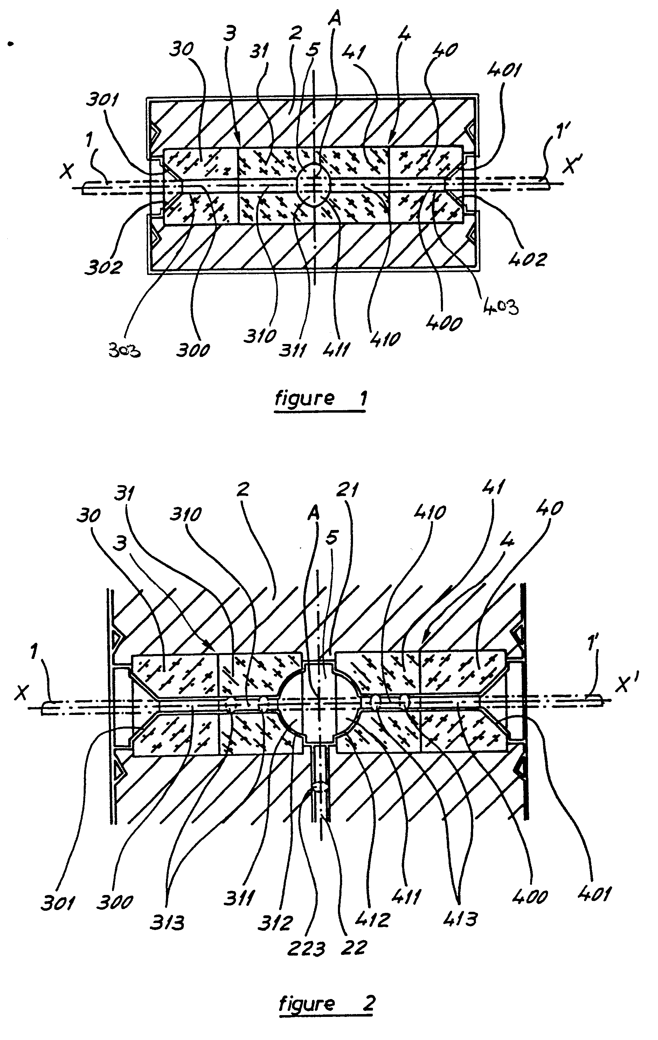

– les figures 1 et 2 représentent des vues en coupe selon un plan de symétrie longitudinal de deux modes de réalisation de centreurs pour connecteur de fibres optiques.

Dans les figures 1 et 2 les proportions et rapport de cotes des différents éléments ne sont pas respectés afin de conférer une meilleure clarté à l'ensemble.

Conformément à la figure 1, le centreur pour connecteur de fibres optiques 1 et 1' comprend dans une virole d'assemblage 2 des guides 3 et 4 comportant chacun deux éléments de guidage des fibres 30, 31 et 40, 41. Sur la figure 1 les éléments de guidage représentés sont au nombre de quatre. Chaque guide peut comporter un ou plusieurs éléments de guidage sans sortir du cadre de la présente invention. Les éléments de guidage 30, 31, 40, 41 sont constitués par un matériau dur tel que céramique, carbure de tungstène ou par du corindon synthétique, chacun percé d'un trou 300, 310, 400, 410. Les éléments de guidage sont jointifs et les trous 300, 310, 400, 410 alignés et coaxiaux forment un canal de guidage dans lequel les brins de fibres, tels que 1 et 1', sont introduits par des cônes d'entrée 301, 401 en vue de leur jonction. Sur la figure 1, les brins de fibres 1 et 1', indépendants du centreur, sont représentés en traits mixtes et la zone de jonction des fibres, endroit du centreur où les extrémités des fibres sont en contact, est située sensiblement au milieu de la virole d'assemblage 2 et est désignée par A.

Les éléments de guidage jointifs 31, 41 comportent en vis-à-vis au niveau de la zone A de jonction des fibres un évidement 311, 411 formant un logement 5 destiné à recevoir pour l'assemblage des fibres un liquide d'indice compatible avec celui des fibres et assurant le couplage optique des extrémités des fibres. L'évidement 311, 411 de chaque élément 31, 41 est sensiblement de révolution par rapport à l'axe de symétrie longitudinal X'X du centreur. L'évidement peut être obtenu par les techniques habituelles d'usinage des pierres d'horlogerie.

Un matériau oléofuge recouvre les parois externes de centreur de la figure 1 et forme notamment des couches 302 et 402 qui recouvrent respectivement les cônes d'entrée 301 et 401.

Les parois des trous 300 et 400 forment des zones 303, 313, 403 et dans lesquelles le corindon affleure. Les zones 303 et 403 délimitent avec les couches 302 et 402 des barrières empêchant l'écoulement du liquide hors des trous 300 et 400.

Par matériau oléofuge on entend tout matériau dont la surface présente une tension superficielle supérieure à celle d'une surface adjacente – faite d'un autre matériau. Cette couche de matériau oléofuge est par exemple du silicone ou du bisulfure de molybdène $MoS_2$. Cette couche peut être appliquée par un bain. L'épaisseur de cette couche est de l'ordre de quelques dizaines de Angström. La couche de matériau oléofuge permet d'obtenir une surface de guidage à coefficient de frottement très faible permettant d'assurer une jonction des fibres sans dommages pour celles-ci.

Les parois des trous 300 et 400 n'étant pas revêtue d'un matériau oléofuge, il s'en suit une discontinuité de la valeur de la tension superficielle à la frontière entre ces trous et les cônes 301, 401. Cette discontinuité constitue une barrière empêchant l'écoulement du liquide hors du connecteur, lorsqu'on retire les fibres 1 et 1'.

Conformément à un mode de réalisation particulier de la figure 2, les pierres 31 et 41 comportant un évidement 311, 411 formant logement 5 sont montées en butée d'une bague interne 21 de la virole 2. Plus précisément, la bague 21 est disposée sensiblement au niveau de la zone A de jonction des fibres et assure un espacement des guides 3 et 4 pour former le logement 5 destiné à recevoir le liquide de couplage, de capacité augmentée. Ce logement est en communication avec l'extérieur par une lumière 22 traversant la virole 2. La virole 2 est constituée d'un matériau usinable par décolletage, par exemple du laiton. Les éléments de guidage sont montés dans la virole, en butée contre la bague conformément à la figure 2, sertis dans la virole. Le perçage préalable de l'ensemble des éléments permet d'assurer après grandissage des trous un alignement parfait du canal de guidage et un centrage des faces de contact des fibres très précis. Le trou central de chaque élément a un diamètre correspondant à celui des fibres. Le diamètre du trou formant la lumière 22 mettant en communication le réservoir avec l'extérieur est d'environ 0,3 mm.

Dans ce mode de réalisation, les parois du logement 5 formé par les évidements 311, 411 et l'espace central de la bague 21, et celles de la lumière 22 et des trous 300, 310, 400 et 410 sont en partie formées de couches 222, 302, 312, 402 et 412 de matériau oléofuge. Plus précisément les trous 310, 410 et la lumière 22 comportent des zones 313, 413 respectivement 223, dans lesquelles le matériau sous-jacent, c'est-à-dire le corindon pour les trous, le laiton pour la lumière, affleure pour former des barrières empêchant l'écoulement du liquide hors du connecteur.

Les zones 313, 413 s'étendent dans une direction parallèle à l'axe X'X sur une distance voisine de 100 à 150 µm. Lors du démontage de la connexion, le liquide de couplage est aspiré par le déplacement des fibres dans les trous centraux 310 et 410. La rencontre par le liquide de couplage des zones 313, 413, a pour effet d'assurer un ancrage de la veine liquide à ces zones et de permettre l'arrêt de l'écoulement et de la perte du liquide de couplage. Le matériau oléofuge peut être disposé aussi bien sur des matériaux de type pierres synthétiques que laiton ou acier nickelé.

Les trous 300 et 400 de chacun des éléments latéraux 30 et 40 se terminent vers l'extérieur par une partie conique 301 et 401. Cette partie facilite la mise en place des fibres 1, 1'.

### Revendications

1. Centreur pour connecteur de fibres optiques (1, 1') comprenant une virole d'assemblage (2) et deux guides (3, 4) logés et positionnés dans la virole (2) et définissant entre eux un logement (5) destiné à recevoir un liquide de couplage optique desdites fibres, chacun desdits guides (3, 4) comportant un trou (300, 310, 400, 410) destiné à recevoir l'une desdites fibres (1, 1'), les deux trous (300, 310, 400, 410) étant coaxiaux, caractérisé en ce que les parois de chacun des deux guides comportent une première partie (302, 312, 402, 412) revêtue d'une couche de matériau oléofuge et une deuxième partie (313, 413) non revêtue dudit matériau, agencées de manière à délimiter des barrières annulaires empêchant l'écoulement dudit liquide hors du connecteur.

2. Centreur selon la revendication 1, caractérisé en ce que les parois desdits trous comportent au moins deux zones revêtues dudit matériau, entre lesquelles se trouve une zone (313, 413) libre de matériau oléofuge.

3. Centreur selon l'une des revendications 1 et 2, caractérisé en ce qu'il comporte en outre une lumière (22) reliant ledit logement (5) vers l'extérieur du centreur.

4. Centreur selon la revendication 3 caractérisé en ce que les parois de ladite lumière (22) comportent au moins deux zones revêtues dudit matériau, entre lesquelles se trouve une zone (223) libre de matériau oléofuge.

5. Centreur selon l'une quelconque des revendications 1 à 4, caractérisé en ce que ledit matériau est du bisulfure de molybdène.

6. Centreur selon l'une quelconque des revendications 1 à 4, caractérisé en ce que ledit matériau est du silicone.

### Claims

1. A centering device for use in a connector for optic fibres (1, 1'), comprising a coupling ring (2) and a pair of guide members (3, 4) housed and positioned in the coupling ring (2) and defining therebetween a chamber (5) arranged to receive a liquid for optically coupling said fibres, each of said guide members (3, 4) having a hole (300, 310, 400, 410) for receiving one of said fibres (1, 1'), both holes (300, 310, 400, 410) being coaxial, characterized in that the walls of each of said pair of guide members include a first portion (302, 312, 402, 412) that is clad with a layer of oil repellent material and a second portion (313, 413) that is not clad with said material, said portions being arranged to define annular barriers that will prevent said liquid from flowing out of said connector.

2. A centering device according to claim 1, characterized in that the walls of said holes include at least two regions that are clad with said material, between which lies a region (313, 413) that is free of oil repellent material.

3. A centering device according to any one of claims 1 and 2, characterized in that it further comprises an aperture (22) connecting said chamber (5) with the outside of the centering device.

4. A centering device according to claim 3, characterized in that the walls of said aperture (22) include at least two regions that are clad with said material, between which lies a region (223) that is free of oil repellent material.

5. A centering device according to any one of claims 1 to 4, characterized in that said material is molybdenum bisulphide.

6. A centering device according to any one of claims 1 to 4, characterized in that said material is silicone.

### Patentansprüche

1. Zentriervorrichtung für Steckverbinder von Lichtleitfasern (1, 1'), umfassend eine Montagehülse (2) und zwei in der Hülse (2) eingelegte und positionierte Führungen (3, 4), die zueinander eine Kammer (5) definieren, in der eine Flüssigkeit zur optischen Kupplung der genannten Fasern aufgenommen wird, wobei jede der genannten Führungen (3, 4) eine Bohrung (300, 310, 400, 410) zur Aufnahme einer der genannten Fasern (1, 1') umfasst und die beiden Bohrungen (300, 310, 400, 410) koaxial sind, dadurch gekennzeichnet, dass die Wände jeder der beiden Führungen einen ersten Teil (302, 312, 402, 412) umfassen, der mit einem ölhemmenden Material beschichtet ist und einen zweiten Teil (313, 413), der nicht mit dem genannten Material beschichtet ist, so angeordnet, dass ringförmige Barrieren gebildet werden, die das Ausfliessen der genannten Flüssigkeit aus dem Verbinder verhindern.

2. Zentriervorrichtung gemäss Anspruch 1, dadurch gekennzeichnet, dass die Wände der genannten Bohrungen mindestens zwei mit dem genannten Material beschichtete Zonen umfassen, zwischen denen sich eine Zone (313, 413) befindet, die von ölhemmendem Material frei ist.

3. Zentriervorrichtung gemäss einem der Ansprüche 1 und 2, dadurch gekennzeichnet, dass sie einen Zugangskanal (22) umfasst, über den die genannte Kammer (5) mit der Aussenseite der Zentriervorrichtung verbunden ist.

4. Zentriervorrichtung gemäss Anspruch 3, dadurch gekennzeichnet, dass die Wände des genannten Zugangskanals (22) mindestens zwei mit dem genannten Material beschichtete Zonen umfassen, zwischen denen sich eine Zone (223) befindet, die von ölhemmendem Material frei ist.

5. Zentriervorrichtung gemäss eines beliebigen der Ansprüche 1 bis 4, dadurch gekennzeichnet, dass das genannte Material Molybdändisulfid ist.

6. Zentriervorrichtung gemäss eines beliebigen der Ansprüche 1 bis 4, dadurch gekennzeichnet, dass das genannte Material Silikon ist.

figure 1

figure 2